# FASCICULE DE BREVET EUROPEEN

(11) **EP 3 332 542 B1**
(45) Date de publication et mention de la délivrance du brevet: **28.10.2020**
(21) Numéro de dépôt: 16750987.6
(22) Date de dépôt: 25.07.2016
(51) Int. Cl.: H04N 1/047, H04N 1/028

(54) **APPAREIL DE NUMÉRISATION**
DIGITALISIERUNGSVORRICHTUNG
DIGITISING APPARATUS

(30) Priorité: 07.08.2015 FR 1557607
(43) Date de publication de la demande: 13.06.2018
(73) Titulaire: ARJO SOLUTIONS, 75014 Paris (FR)
(72) Inventeur: BARTHELEMY, Brice, 73100 Aix Les Bains (FR); MACHIZAUD, Jacques, 38500 Voiron (FR)
(74) Mandataire: Cabinet Beau de Loménie
(86) Numéro de dépôt international: PCT/FR2016/051928
(87) Numéro de publication internationale: WO 2017/025676

(56) Documents cités:
- EP-A1- 2 220 481
- EP-A2- 0 800 307
- EP-A2- 1 968 299

## Description

L'invention concerne un appareil de numérisation pour acquérir une image numérique d'une surface d'un objet. Plus particulièrement, cet appareil peut être utilisé dans un procédé d'authentification de l'objet utilisant l'image numérique acquise grâce à l'appareil, en identifiant dans l'image numérique au moins une caractéristique structurelle de la surface du matériau.

Le document FR-2.866.139 décrit un procédé pour protéger et un procédé pour lire des informations qui mettent en œuvre une signature numérique obtenue à partir d'au moins une caractéristique structurelle d'un élément matériel rendant compte de sa structure chaotique, complexe, unique et stable. Ce procédé est particulièrement applicable lorsque l'élément matériel est un matériau fibreux, notamment un papier, un carton ou un matériau fibreux non-tissé, dont la surface, qui à l'échelle macroscopique est plane, présente, à l'échelle microscopique, des irrégularités de surface dont la dimension est inférieure au millimètre, et qui possède cette caractéristique d'être chaotique, complexe unique et stable. Un tel procédé est particulièrement performant. Il nécessite d'acquérir, par des moyens les moins complexes, les moins coûteux possibles, une caractérisation de la géométrie de la surface de l'objet. Un procédé de ce genre est aussi décrit dans le document EP-1.747.540.

Le document EP-2.220.481-B1 décrit un dispositif pour l'observation de détails structurels millimétriques submillimétriques d'un objet présentant un comportement au moins en partie spéculaire, qui acquiert une image bidimensionnelle d'une zone d'intérêt de l'objet.

Le document US-7.850.077 décrit des systèmes et méthodes d'authentification de documents, notamment de type passeport, qui comprennent un scanner. Plusieurs modes de réalisation du scanner sont décrits qui impliquent soit un déplacement de l'objet à numériser par rapport à un capteur fixe, soit un déplacement d'un ensemble comportant une ou plusieurs sources lumineuses et un ou plusieurs capteurs alignés selon une direction transversale au déplacement.

EP-0.800.307 et EP-1.968.299 décrivent des appareils de numérisation ayant un éclairage formant un angle inférieur à 45 degrés d'angle.

Les procédés d'authentification de ce type sont utiles non pas seulement pour authentifier des supports d'information de type feuille, mais aussi pour authentifier des objets et notamment des emballages. Dans le domaine de l'emballage, on utilise de nombreux matériaux dont la surface présente la caractéristique d'être chaotique, complexe, unique et stable au sens du document FR-2.866.139. La nature de ces matériaux, leurs propriétés optiques et la forme de ces emballages peuvent être très variables et il y a donc un fort intérêt à pouvoir concevoir un appareil capable, dans des conditions d'utilisation normale de type industriel, d'acquérir une image de la surface qui soit propre à rendre compte de cette caractéristique de la surface du matériau, quel que soit l'objet et les propriétés optiques du matériau.

L'invention a pour but de proposer un appareil de numérisation pour acquérir une image numérique de la surface d'un objet, notamment en vue d'extraire de cette image numérique une caractéristique structurelle de la surface du matériau de l'objet, qui puisse être utilisée pour des objets variés.

Dans ce but, l'invention propose un appareil de numérisation pour acquérir une image numérique d'une surface d'un objet, tel que définit par la revendication 1.

Selon d'autres caractéristiques optionnelles de l'invention, prises seules ou en combinaison :
- La première direction principale d'incidence peut former, dans un plan perpendiculaire à la direction d'extension du capteur, un angle supérieur à 10 degrés par rapport au plan de référence, de préférence supérieur à 16 degrés.
- La seconde direction principale d'incidence du second éclairage peut être perpendiculaire au plan de référence.
- Le premier et le second dispositifs d'éclairage peuvent être mis en œuvre indépendamment l'un de l'autre.
- Le premier et le second dispositifs d'éclairage peuvent mettre en oeuvre des sources lumineuses distinctes.
- Le second dispositif d'éclairage peut générer, dans le plan de référence, un éclairage qui présente un gradient d'intensité selon la direction de déplacement, de part et d'autre du plan optique principal du dispositif de captation.
- Le gradient d'intensité peut être continu de part et d'autre du plan optique principal du dispositif de captation.
- Le second dispositif d'éclairage peut comporter une lame de réflexion qui renvoie vers le plan de référence, selon la seconde direction principale d'incidence, au moins une partie d'un flux lumineux émis par la source lumineuse du second dispositif d'éclairage.
- Le second dispositif d'éclairage peut comprendre une source lumineuse présentant un plan d'émission principal qui, après réflexion sur la lame de réflexion, est décalé selon la direction de déplacement par rapport au plan optique principal du dispositif de captation.
- Le premier et/ou le second dispositif d'éclairage peut comprendre une source lumineuse comportant une série de sources lumineuses élémentaires décalées l'une par rapport à l'autre selon la direction d'extension du capteur.
- Le premier dispositif d'éclairage et/ou le second dispositif d'éclairage peut être fixe par rapport au dispositif de captation, par exemple en étant solidaire directement ou indirectement du bloc d'acquisition, voire intégré à celui-ci.
- Le dispositif de captation peut comporter un dispositif d'exposition optique qui conjugue optiquement le capteur avec le plan de référence.
- Le dispositif d'exposition optique peut comporter une série de dispositifs d'exposition optique élémentaires dont chacun est associé à une cellule du capteur.
- Le dispositif d'exposition optique peut avoir un grandissement de 1.
- L'appareil peut comporter au moins un premier bloc d'acquisition et un second bloc d'acquisition qui sont agencés parallèlement en étant décalés selon la direction de déplacement et/ou selon la direction d'extension du capteur.
- Les deux blocs d'acquisition peuvent présenter des portions de recoupement qui sont en vis-à-vis l'une de l'autre selon la direction de déplacement.
- Les deux blocs d'acquisition peuvent être solidaires du même chariot mobile par rapport au châssis.
- Le déplacement relatif, selon une direction de déplacement, d'un objet à scanner par rapport au bloc d'acquisition peut être assuré par un dispositif de déplacement extrinsèque à l'appareil.
- L'appareil peut comporter un châssis, le bloc d'acquisition peut être fixe par rapport au châssis, et l'appareil peut comporter un dispositif de déplacement apte à provoquer un déplacement relatif d'un objet à scanner selon la direction de déplacement, par rapport au châssis, en regard du bloc d'acquisition.
- L'appareil peut comporter un châssis, un chariot monté mobile et entraîné par rapport au châssis selon la direction de déplacement, et le bloc d'acquisition peut être porté par le chariot.
- L'appareil peut comporter une vitre qui est fixe par rapport au châssis et qui comporte une face supérieure qui coïncide avec le plan de référence.
- La vitre peut être transparente à la longueur d'ondes ou plage de longueurs d'ondes émise par le premier et le second dispositif d'éclairage.
- La vitre peut comporter un traitement antireflets.
- La direction de déplacement peut être une direction longitudinale correspondant à la plus grande dimension de l'appareil.
- La direction d'extension du capteur peut être une direction perpendiculaire à la direction de déplacement.
- Le premier dispositif d'éclairage peut s'étendre selon la direction d'extension du capteur, de préférence sur toute l'étendue du capteur selon la direction d'extension du capteur.
- Le second dispositif d'éclairage peut s'étendre selon la direction d'extension du capteur, de préférence sur toute l'étendue du capteur selon la direction d'extension du capteur.
- Le dispositif de captation peut présenter au moins un plan optique principal, et le plan optique principal peut former, dans un plan perpendiculaire au plan de référence et orienté selon la direction de déplacement, un angle aigu supérieur à 45 degrés par rapport à la direction longitudinale de déplacement, de préférence supérieur à 80 degrés.
- Le dispositif de captation peut présenter au moins un plan optique principal, et le plan optique principal peut former, dans un plan perpendiculaire au plan de référence et orienté selon la direction de déplacement, un angle aigu supérieur à 45 degrés et inférieur à 80 degrés, par rapport à la direction longitudinale de déplacement.
- Le dispositif de captation et le deuxième dispositif d'éclairage peuvent être agencés respectivement de part et d'autre d'un plan perpendiculaire au plan de référence, parallèle à la direction d'extension du capteur et contenant une intersection du plan optique principal avec le plan de référence.

Diverses autres caractéristiques ressortent de la description faite ci-dessous en référence aux dessins annexés qui montrent, à titre d'exemples non limitatifs, des formes de réalisation de l'objet de l'invention.
La **figure 1** illustre une vue en perspective des principaux éléments d'un appareil de numérisation conforme aux enseignements de l'invention.
La **figure 2** est une vue en section par un plan perpendiculaire à la direction transversale en travers d'un bloc d'acquisition d'un appareil selon l'invention.
Les **figures 3A** à **3C** sont des schémas en section par trois plans perpendiculaires à la direction transversale illustrant l'utilisation d'un appareil selon l'invention comportant un second dispositif d'éclairage générant un éclairage à gradient d'intensité.
La **figure 4** est une vue similaire à celle de la **figure 2** illustrant une variante de réalisation dans laquelle le déplacement relatif de l'objet à scanner par rapport au bloc d'acquisition est obtenu par un dispositif de déplacement qui assure un déplacement de l'objet, qui est alors mobile, par rapport au bloc d'acquisition, qui est alors fixe.

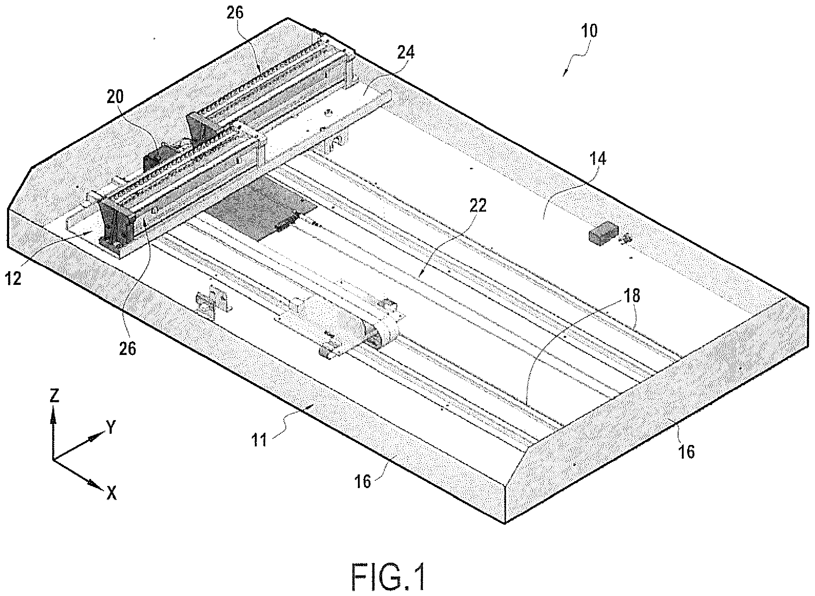

On a illustré sur la **figure 1** un appareil de numérisation **10** selon l'invention qui comporte pour l'essentiel un châssis **11** par rapport auquel un chariot **12** est monté mobile selon une direction de déplacement, qui, par référence à l'exemple particulier illustré, sera dite direction longitudinale **X.** On note en effet, que, dans le mode de réalisation qui va être décrit plus en détail, l'appareil est du type dans lequel un bloc d'acquisition est mobile par rapport à un châssis de l'appareil, tandis que l'objet a vocation à être fixe par rapport à ce châssis pendant la numérisation.

Toutefois, l'invention pourrait aussi être mise en œuvre dans le cadre d'un appareil de numérisation dans lequel un bloc d'acquisition est fixe par rapport à un châssis de l'appareil, tandis que l'objet aurait vocation à être déplacé par rapport à ce châssis, par un dispositif de déplacement qui pourrait faire partie de l'appareil ou qui pourrait être extrinsèque à l'appareil de numérisation. Dans les deux cas, le dispositif de déplacement est adapté pour assurer le déplacement de l'objet.

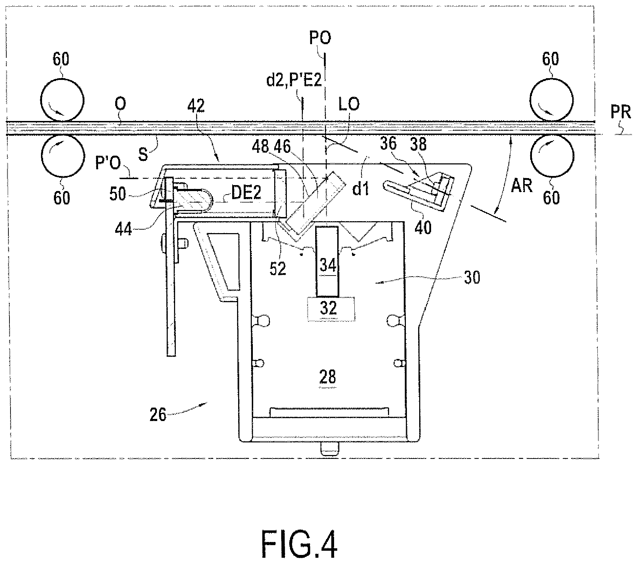

Si l'objet à numériser est de type feuille, le dispositif de déplacement peut avantageusement être identique ou similaire aux dispositifs couramment mis en œuvre dans les imprimantes, les numériseurs ou les photocopieurs, tel qu'illustré à la **figure 4****,** par exemple en faisant appel à des rouleaux et/ou des galets motorisés **60.** Le dispositif de déplacement peut alors aisément être intégré à l'appareil de numérisation, en étant solidaire par exemple du châssis de l'appareil. Dans ce cas, on peut bien entendu considérer que le châssis de l'appareil est fixe, et que l'objet à scanner est entraîné par rapport à ce châssis fixe. Cependant, on peut aussi prévoir, notamment si l'objet à scanner est de très grandes dimensions, que le dispositif de déplacement intégré à l'appareil soit du type roues motorisées ou chenilles motorisées, permettant d'assurer le déplacement de l'appareil par rapport à l'objet qui est alors considéré comme fixe.

Si l'objet à numériser est de type tridimensionnel, le dispositif de déplacement sera avantageusement inspiré des systèmes de convoyage utilisés couramment pour les objets de même type. Dans ce cas, il peut être avantageux de prévoir que le dispositif de déplacement soit extrinsèque à l'appareil de numérisation.

Dans le cas d'un dispositif de déplacement extrinsèque, on a en réalité affaire à un appareil de numérisation qui peut être aisément et avantageusement installé sur un système de convoyage préexistant, comme on en trouve sur les lignes de fabrication, d'assemblage, de conditionnement, de peinture, etc... On peut aussi prévoir que le dispositif de déplacement par exemple celui illustré à la **figure 4****,** comportant notamment les rouleaux et/ou galets motorisés **60,** soit extrinsèque à l'appareil de numérisation, donc par exemple rattaché à un autre châssis, distinct du châssis **11** de l'appareil de numérisation.

Dans l'exemple illustré, le châssis **11** comporte une paroi de fond **14** qui s'étend selon un plan contenant la direction longitudinale **X** et une direction perpendiculaire qui, par référence à l'exemple particulier illustré, sera dite direction transversale **Y.** Par commodité, les directions longitudinales **X** et transversale **Y** seront réputées former un plan horizontal, sans toutefois que cela n'ait d'implication dans l'orientation effective de l'appareil lors de son utilisation. En conséquence, on peut définir une direction **Z,** perpendiculaire aux directions longitudinale **X** et transversale **Y,** qui sera qualifiée arbitrairement de verticale dans la suite du texte. Les bords du châssis **11** sont formés par des parois verticales **16** transversales et longitudinales correspondant à chacun des quatre bords du fond **14** pour former un boîtier ouvert vers le haut.

Le chariot **12** est monté mobile sur le châssis **11** selon la direction de déplacement, ici la direction longitudinale, par exemple par l'intermédiaire d'une série de rails longitudinaux **18** disposés sur la paroi de fond **14** du châssis **11** et sur lequel le chariot **12** peut rouler en étant parfaitement guidé selon les directions transversale et verticale. Le chariot **12** est motorisé. Par exemple, un moteur électrique **20,** fixé à une extrémité longitudinale de la paroi de fond **14,** permet de commander le déplacement du chariot **12** selon sa trajectoire longitudinale entre deux positions longitudinales extrêmes dont une est illustrée sur la **figure 1****.** La distance entre les deux positions longitudinales extrêmes, ou distance de balayage est par exemple supérieure à 50 mm, de préférence supérieure à 300 mm, par exemple comprise entre 400 et 500 mm dans l'exemple illustré. La transmission de mouvement entre le moteur et le chariot peut se faire par exemple par une transmission par câble **22** comme illustré sur la **figure 1****,** mais tout autre moyen de transmission peut aussi être utilisé comme par exemple une transmission par courroie, par crémaillère, etc....

Le chariot **12** comporte pour l'essentiel une traverse de support **24** supportant au moins un bloc d'acquisition **26** comportant notamment un capteur optique, par exemple photoélectrique, et au moins un dispositif d'éclairage. Un bloc d'acquisition **26** s'étend pour l'essentiel selon une direction transversale **Y** qui correspond, dans cet exemple de réalisation, à une dimension principale d'extension du capteur photoélectrique.

Dans l'exemple illustré, l'appareil de numérisation est un appareil de grande taille, capable de numériser en une seule passe du chariot une surface ayant une dimension supérieure à 300 mm selon la direction transversale, par exemple comprise entre 400 et 500 mm. De la sorte, l'appareil **10** comporte non pas un, mais deux blocs d'acquisition **26** qui sont décalés transversalement l'un par rapport à l'autre, donc selon la direction d'extension du capteur, ici perpendiculaire à la direction de déplacement du chariot **12,** afin que chaque bloc d'acquisition **26** puisse acquérir une image d'une partie d'un objet et que les deux images acquises par les deux blocs d'acquisition soient réunies pour former une image de plus grande largeur. Avantageusement, il est prévu des moyens pour avoir une continuité, dans la direction d'extension du capteur, de l'image réunissant les deux images acquises par chacun des blocs d'acquisition **26.** Pour cela, on prévoit par exemple que les deux blocs d'acquisition **26** présentent une zone de recoupement selon cette direction, au moins en ce qui concerne la structure des blocs d'acquisition. En effet, on peut prévoir que les capteurs photoélectriques présentent eux aussi un recoupement selon la direction d'extension du capteur, ici transversale, ou simplement que les deux capteurs soient agencés sans recoupement mais sans discontinuité selon la direction transversale. Toutefois, du fait de l'encombrement de la structure des blocs, il est nécessaire, dans l'exemple de réalisation illustré, de décaler les deux blocs aussi selon la direction perpendiculaire à la direction d'extension du capteur, correspondant dans ce mode de réalisation à la direction de déplacement, ici longitudinale. Dans l'exemple illustré, les deux blocs sont identiques, ce qui permet des économies de coûts. Dans l'exemple, la structure des blocs déborde transversalement des extrémités transversales du capteur, ne permettant pas d'assurer la continuité de l'image si on plaçait les deux blocs transversalement dans l'alignement l'un de l'autre. Pour assurer la continuité, on a donc disposé les deux blocs **26** de manière parallèle mais avec un décalage entre eux selon la direction perpendiculaire à la direction d'extension du capteur, ici longitudinale. Il en résulte que les capteurs des deux blocs d'acquisition **26,** bien qu'ayant une extension selon la direction transversale, présentent eux aussi un décalage selon la direction longitudinale. Ce décalage longitudinal des capteurs photoélectriques des deux blocs peut être pris en compte lors du traitement des images recueillies par chacun des deux capteurs pour, par réalignement informatique des lignes transversales d'images correspondantes acquises par les capteurs, former une image sans décalage de l'intégralité de la dimension transversale de l'objet. Bien entendu, on pourrait prévoir plus de deux blocs d'acquisition décalés ainsi alternativement sur deux rangs transversaux, par exemple pour former un appareil de plus grande dimension transversale ou pour utiliser des blocs d'acquisition de plus petite dimension transversale.

On notera que, dans l'exemple de réalisation, le chariot, et donc le capteur se déplacent selon la direction de déplacement qui est la plus grande dimension du dispositif, notamment par rapport à la direction d'extension du capteur. Cependant, une configuration inverse pourrait être retenue.

Dans l'exemple de réalisation, la direction d'extension du capteur est ici perpendiculaire à la direction de déplacement du chariot. On considérera que les deux directions sont perpendiculaires si elles forment un angle compris entre 80 degrés et 100 degrés, de préférence entre 85 degrés et 95 degrés. Cependant, il serait possible de prévoir que ces deux directions soient des directions non perpendiculaires, tout en étant non parallèles.

Pour chaque bloc **26,** le capteur et le dispositif d'éclairage sont bien entendus tournés verticalement à l'opposé du fond **24,** en direction d'une fenêtre d'acquisition du boîtier qui est ici le côté supérieur ouvert du boîtier. Bien que non représenté sur la **figure 1****,** le boîtier est avantageusement recouvert d'une vitre **27,** s'étendant selon un plan longitudinal et transversal.

On comprend que, de manière classique, un objet peut être présenté devant la fenêtre d'acquisition de l'appareil **10** et, sans nécessiter de déplacement de l'objet, le chariot **12** peut être commandé en translation selon la direction longitudinale, le ou les capteurs photoélectriques acquérant, au fur et à mesure du déplacement du chariot, une série d'images qui correspondent chacune à une image d'une bande transversale élémentaire de la surface de l'objet. L'image peut ainsi être une image linéaire, ou unidimensionnelle, constituée d'une seule ligne de pixels. À la fin de la course du chariot, l'appareil de numérisation a donc acquis une série d'images qui peuvent être accolées l'une à l'autre informatiquement pour former une image numérique continue, bidimensionnelle, de la surface de l'objet présenté devant l'appareil.

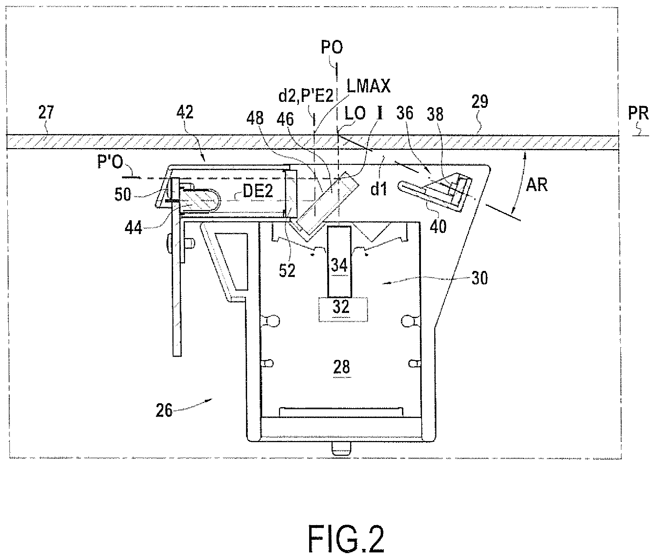

Un bloc d'acquisition **26** est représenté, en section transversale, sur la **figure 2****.** Les deux blocs d'acquisition **26** étant identiques, on ne décrira en détail que l'un d'eux. Pour le second, on retrouve les mêmes éléments, simplement décalés selon la direction transversale d'extension de capteur et selon la direction longitudinale.

Un tel bloc d'acquisition **26** comporte une structure porteuse **28** sur laquelle est monté un dispositif de captation optique **30.** Le dispositif de captation **30** est ici conçu selon la technologie connue sous l'acronyme CIS (Contact Image Sensor). Selon cette technologie, le dispositif de captation **30** comporte un capteur optique, en l'occurrence un capteur photoélectrique linéaire **32,** composé d'un alignement de cellules optiques, ici photoélectriques, selon la direction d'extension du capteur, ici transversale. Dans l'exemple illustré, chaque bloc d'acquisition **26** comporte par exemple un capteur photoélectrique qui s'étend transversalement sur **240** mm. Les cellules photoélectriques sont généralement réalisées selon la technologie CMOS. Le capteur photoélectrique linéaire **32** est généralement monté sur une plaque à circuit imprimé (non représentée) portant au moins une partie d'un circuit électronique d'acquisition d'image. Chaque cellule photoélectrique peut avoir une dimension, selon les directions transversales et longitudinales inférieure à 0.1 mm, voire inférieure à 0.05 mm, mais par exemple supérieure à 0.001 mm. L'appareil **10** peut comporter une carte électronique principale, montée fixe sur le châssis **11** et reliée aux blocs d'acquisition par une nappe de connexion permettant le mouvement relatif du chariot par rapport à la carte électronique. Cette carte électronique principale est par exemple reliée à un connecteur par lequel l'appareil peut être relié à un système informatique auquel est transmise l'image acquise par l'appareil.

Le dispositif de captation comporte avantageusement de plus, comme dans les blocs d'acquisition de technologie CIS, un dispositif optique d'exposition **34.** Le dispositif optique d'exposition **34** est assimilable à une lentille ou à une série de lentilles ou à un objectif. Il peut aussi comprendre un ou plusieurs diaphragmes. Ce dispositif optique d'exposition **34** peut comprendre une micro lentille (non représentée) éventuellement associée à chaque cellule photoélectrique au sein du capteur. Le dispositif optique d'exposition **34** s'étend selon la direction d'extension du capteur **32,** de préférence sur la même étendue transversale que celui-ci. Le dispositif optique d'exposition **34** peut comporter une série de dispositifs optiques d'exposition élémentaires, par exemple associés respectivement à chaque cellule photoélectrique du capteur **32.** Dans ce cas, chaque dispositif élémentaire peut avoir son propre axe optique. Le plan optique principal **P0** du dispositif de captation correspond alors au plan formé par l'ensemble des axes optiques des dispositifs élémentaires. Inversement, on peut considérer que, dans chaque plan perpendiculaire au plan optique principal **P0,** ce dernier définit un axe optique à l'intersection des deux plans.

Dans l'exemple illustré, le plan optique principal **P0** du dispositif de captation est perpendiculaire à la direction de déplacement. Le plan optique sera considéré comme perpendiculaire à la direction de déplacement s'il forme un angle aigu supérieur à 80°, de préférence 85° avec cette direction de déplacement, donc un angle obtus inférieur à 110°, de préférence inférieur à 105°.

De manière plus générale, le plan optique pourrait être incliné par rapport à la direction de déplacement, c'est-à-dire former un angle aigu supérieur à 45 degrés, de préférence supérieur à 80°, plus préférentiellement supérieur à 85°, par rapport à cette direction, donc un angle obtus inférieur à 135°, de préférence inférieur à 110°, plus préférentiellement inférieur à 105°.

Le dispositif de captation **30** possède un champ de vision, comme étant la zone de l'espace visible par le capteur **32,** dans le cas présent au travers du dispositif optique d'exposition **34.** Plus spécifiquement, le dispositif optique d'exposition **34** permet de conjuguer optiquement, dans le champ de vision, le plan de captation du capteur **32,** correspondant à la surface photosensible des cellules photoélectriques, avec un plan de référence **PR.** En d'autres termes, des rayons optiques issus d'un point donné du plan de référence **PR** et traversant le dispositif d'exposition **34** se recoupent tous en un même point image dans le plan de captation du capteur. Cette relation est vérifiée de préférence au moins sur des points spécifiques du plan de référence, en particulier sur une bande de vision utile correspondant à un champ de vision utile du capteur photoélectrique dans le plan de référence, au travers du dispositif optique d'exposition **34.** Le plan de référence correspond donc à un plan de netteté pour le dispositif de captation, au moins pour la bande de vision utile. Cette bande de vision utile, dans le plan de référence, s'étend sur la dimension du capteur **32** selon la direction d'extension du capteur, ici transversale, et sur une dimension perpendiculaire, ici longitudinale, relativement restreinte.

Le plan de référence correspond donc à un plan parallèle à la direction d'extension du capteur et à la direction de déplacement et conjugué optiquement, pour sa bande de vision utile, avec le plan de captation du capteur **32** au travers du dispositif d'exposition **34.**

Bien entendu, lors de l'utilisation de l'appareil, on cherchera à placer la surface d'un objet à analyser en coïncidence avec le plan de référence, ou tout du moins dans la profondeur de champ du dispositif de captation par rapport à ce plan de référence **PR.**

Dans certaines variantes non représentées de l'invention, notamment celles pour lesquelles le bloc d'acquisition est fixe par rapport à un châssis de l'appareil, cette coïncidence sera de préférence assurée au moins dans la bande de vision utile. En effet, de manière générale, le déplacement relatif de l'objet à scanner par rapport au bloc d'acquisition pourra être tel qu'il amène successivement les différentes portions de la surface de l'objet à scanner en coïncidence avec le plan de référence dans la bande de vision utile du dispositif de captation, ou tout du moins dans la profondeur de champ du dispositif de captation par rapport à ce plan de référence. On note en effet qu'en assurant un déplacement relatif adéquat de l'objet à scanner par rapport au bloc d'acquisition, on pourra scanner une surface non plane. Par exemple, on pourra scanner une surface cylindrique de révolution d'un objet en provoquant un déplacement relatif de l'objet à scanner par rapport au bloc d'acquisition selon un mouvement rotatif autour de l'axe de la surface cylindrique.

Dans le cas général, y compris celui d'un mouvement relatif différent d'une translation, la direction de déplacement à considérer pour la définition du plan de référence pourra être la direction tangente au mouvement relatif en un point de la surface de l'objet situé, à un instant donné, dans le plan optique principal du dispositif de captation.

De la sorte, en utilisation de l'appareil, on pourra identifier le plan de référence **PR** comme étant un plan tangent à un point de la surface à scanner **S** de l'objet **O,** ce point étant situé, à un instant donné, dans le plan optique principal **P0** du dispositif de captation, ce plan étant de plus parallèle à la direction d'extension du capteur.

Dans le cas de l'utilisation de blocs d'acquisition de technologie CIS, la dimension de la bande de vision utile, selon la direction longitudinale, est généralement identique à la dimension des cellules photoélectriques du capteur selon la direction longitudinale. En d'autres termes, le dispositif d'exposition optique **34** présente généralement un grandissement unitaire, de tel sorte qu'un objet placé dans le plan de référence forme, au travers du dispositif d'exposition **34,** une image de même dimension dans le plan de captation. Dans un exemple de réalisation, la bande de vision utile présente une dimension comprise entre 10 et 500 microns, par exemple de l'ordre de 20 microns. Avec une autre technologie de blocs d'acquisition optique, un grandissement différent pourrait être utilisé pour obtenir un résultat similaire, avec toutefois un encombrement différent.

Pour que la surface d'un objet soit vue avec le maximum de netteté par le capteur, il convient donc de placer la surface de cet objet en coïncidence avec le plan de référence **PR.** Dans un exemple de réalisation, la distance entre le plan de référence et l'extrémité terminale (en l'occurrence supérieure) du dispositif de captation **30,** en l'occurrence formée par une face externe du dispositif optique d'exposition **34,** est par exemple comprise entre 5 et 40 millimètres, par exemple égale à 19 mm dans l'exemple illustré.

Le dispositif de captation **30** présente un plan optique principal **P0** assimilable à l'axe optique d'un objectif. Ce plan optique principal **P0** est orienté selon la direction d'extension du capteur, ici transversalement, et donc ici perpendiculairement à la direction longitudinale. Il correspond de préférence à un plan de symétrie du champ de vision du capteur au travers du dispositif optique d'exposition **34.** Le plan optique principal **P0** correspond de préférence à un plan de symétrie de la bande de vision utile du dispositif de captation **30** dans le plan de référence **PR.** On notera que le dispositif de captation **30** pourrait comporter un ou plusieurs miroirs de renvoi entre le plan de référence **PR** et le plan de captation du capteur **32,** auquel cas le plan optique principal **P0** du dispositif de captation serait en réalité un plan « plié » autour de chacune des réflexions sur ces miroirs de renvoi.

Dans l'exemple illustré, le plan de référence **PR** coïncide avec la surface externe **29** de la vitre **27.** En présence d'une telle vitre **27,** il convient donc de mettre la surface de l'objet en appui sur la face externe **29** de la vitre **27** pour obtenir une image de netteté optimale de cette surface par le dispositif de captation **30.**

Dans l'exemple illustré, le plan de captation du capteur **32** est considéré comme étant parallèle ou sensiblement parallèle au plan de référence. Le plan optique principal **P0** du dispositif de captation **30** est donc, dans ce mode de réalisation, un plan transversal perpendiculaire au plan de référence **PR.** L'intersection du plan optique principal **P0** avec le plan de référence **PR** est une ligne transversale de référence **L0.**

Comme évoqué plus haut, dans certaines variantes (non représentées) de l'invention, il est prévu un déplacement relatif de l'objet à scanner par rapport à un châssis de l'appareil, que ce soit par un dispositif de déplacement intrinsèque ou extrinsèque à l'appareil, et que ce soit l'un ou l'autre de l'objet ou de l'appareil qui soit fixe, l'autre étant mobile. Dans un tel cas, il n'y a pas nécessairement de vitre, comme illustré à la **figure 4****,** et le plan de référence peut ne pas correspondre à un plan directement matérialisable de l'appareil. On peut définir cependant le plan de référence comme le plan qui est parallèle à la direction de déplacement relatif et à la direction d'extension du capteur, et qui est situé à une distance du plan de captation du capteur **32,** dans le plan optique principal du dispositif de captation, pour laquelle le plan de captation du capteur, correspondant à la surface photosensible des cellules photoélectriques, est conjugué optiquement avec le plan de référence au travers du dispositif optique d'exposition.

Le bloc d'acquisition **26** est associé à un premier dispositif d'éclairage **36** fournissant, dans le plan de référence, un éclairage rasant dans la bande de vision du dispositif de captation **30.** Le premier dispositif d'éclairage est situé du même côté du plan de référence **PR** que le dispositif de captation **30.**

Avantageusement, le premier dispositif d'éclairage **36** fournit un éclairage ayant, dans la bande de vision utile, une direction principale d'incidence **d1.** Cette direction principale d'incidence **d1** forme, dans un plan perpendiculaire à la direction d'extension du capteur, un angle **AR** inférieur à 45 degrés par rapport au plan de référence, de préférence égal ou inférieur à 30 degrés, plus préférentiellement égal ou inférieur à 20 degrés.

Au sens du présent texte, la direction principale d'incidence **d1** est la direction principale de la lumière arrivant au centre de la bande de vision du dispositif de captation dans le plan de référence **PR.**

Cette caractéristique va à l'encontre du principe selon lequel, pour maximiser l'éclairement d'un objet à observer, on cherche en général à avoir une direction d'incidence perpendiculaire au plan de l'objet à éclairer.

En revanche, un tel éclairage, qui peut être qualifié de « rasant », permet de mieux mettre en valeur une caractéristique structurelle relative à la surface d'un élément matériel, en rendant compte de sa structure, particulièrement lorsque l'élément matériel est un matériau fibreux, notamment un papier, un carton ou un matériau fibreux non-tissé, ou encore un matériel métallique ou synthétique, dont la surface, qui à l'échelle macroscopique est plane, présente, à l'échelle microscopique, des irrégularités de surface dont la dimension est inférieure au millimètre.

Cet éclairage rasant aura notamment pour conséquence que le dispositif de captation captera pour l'essentiel de la lumière diffusée par la surface d'un objet qui serait placée dans le plan de référence, plutôt que la lumière réfléchie de manière spéculaire par cette surface.

De préférence, la première direction principale d'incidence forme, dans un plan perpendiculaire à la direction d'extension du capteur, ici un plan perpendiculaire à la direction transversale, un angle **AR** supérieur à 10 degrés par rapport au plan de référence **PR,** de préférence supérieur à 16 degrés. Grâce à cette caractéristique, on limite le risque d'apparition de zones d'ombres, non éclairées, dans le cas où la surface de l'objet observé ne serait pas plane et comporterait des concavités ou convexités. On assure aussi que l'éclairement reçu par la surface de l'objet observé est suffisant par rapport à la sensibilité du capteur optique.

De préférence, le flux lumineux fourni par le premier dispositif d'éclairage **36,** sur la bande de vision utile dans le plan de référence, est un flux lumineux à rayons parallèles ou sensiblement parallèles, c'est-à-dire ayant un angle d'ouverture nul ou faible. Le flux lumineux fourni par le premier dispositif d'éclairage sera considéré comme à rayons sensiblement parallèles si, dans l'étendue de la bande de vision utile selon la direction de déplacement, l'angle d'incidence des rayons lumineux provenant directement de la source lumineuse ne varie pas de plus de 20°, de préférence pas de plus de 15°, par exemple pas de plus de 10°. De telles conditions peuvent être obtenues avec une source lumineuse émettant une lumière non parallèle, dans la mesure où, dans le plan perpendiculaire à la direction d'extension du capteur, les dimensions de la bande de vision utile et de la source lumineuse sont relativement petites par rapport à la distance entre la source lumineuse et la bande de vision dans le plan de référence. Ainsi, dans le cas d'utilisation de diodes électroluminescentes courantes dans ce type d'application, émettant à 120°, on pourra considérer, que, dans la bande de vision utile, le flux lumineux fourni par le premier dispositif d'éclairage est à rayons sensiblement parallèles si la source est éloignée de plus de 15 mm de la bande de vision utile dans le plan de référence.

Pour déterminer la direction principale d'incidence de l'éclairage de la source lumineuse sur la bande de vision utile dans le plan de référence, on considérera uniquement le flux lumineux généré en direct sur la bande de vision utile dans le plan de référence par la surface d'émission de la source lumineuse **38,** sans considérer les éventuelles réflexions parasites sur les différentes surfaces de l'appareil. En effet, ces réflexions parasites, que l'on cherchera toutefois à minimiser, ont une intensité lumineuse très inférieure à l'intensité lumineuse générée en direct.

Comme on l'a illustré sur la **figure 2****,** la source lumineuse **38** du premier dispositif d'éclairage **36** est de préférence installée sur le bloc d'acquisition de telle sorte que sa direction principale d'émission est dirigée en direction de la ligne de référence **L0** au centre de la bande de vision utile dans le plan de référence. Dans le cas d'une source de lumière non parallèle, la direction principale d'émission est la direction centrale du cône d'émission, généralement celle pour laquelle l'intensité lumineuse est maximale. Généralement, on peut considérer que la direction principale d'émission d'une source est perpendiculaire à la surface de la source de lumière.

Généralement, on pourra définir la direction principale d'incidence de la lumière, telle que vue depuis la bande de vision utile, comme étant celle de la droite qui, dans un plan perpendiculaire à la direction d'extension du capteur, relie la ligne de référence **L0,** qui est située au centre de la bande de vision utile dans le plan de référence, au centre de la surface d'émission de la source lumineuse.

Lorsque la direction d'extension du capteur est perpendiculaire à la direction de déplacement, un plan perpendiculaire à la direction d'extension du capteur est un plan perpendiculaire au plan de référence et orienté selon la direction de déplacement.

Dans le cas de la présence d'une vitre **27,** on pourra tenir compte du léger décalage du trajet des rayons lumineux dû au passage de ceux-ci au travers de la vitre **27.** Avantageusement, la vitre **27** est une vitre dont au moins la face tournée vers la source lumineuse **38** est traitée contre les reflets. De manière connue, un traitement antireflets peut être réalisé sous la forme d'un dépôt en une ou plusieurs couches sur la surface de la vitre pour réduire au maximum les reflets parasites. La ou les couches déposées peuvent par exemple comporter du fluorure de magnésium, du dioxyde de titane, du dioxyde de silicium et/ou d'autres oxydes métalliques. L'épaisseur et la composition des couches déposées sont déterminées par l'homme du métier des traitements antireflets, selon ses connaissances usuelles, notamment en fonction des matériaux déposés et des longueurs d'ondes dont la réflexion veut être limitée.

Dans l'exemple illustré, le premier dispositif d'éclairage **36** est porté par la structure **28** du bloc d'acquisition **26.**

Le premier dispositif d'éclairage **36** comporte une source lumineuse **38.** Celle-ci présente de préférence une extension selon la direction d'extension du capteur identique à la dimension du capteur **32** du bloc d'acquisition **26** selon cette direction, ici transversale.

De préférence, l'intensité lumineuse générée par la source lumineuse **38** est homogène sur toute la bande de vision du dispositif de captation dans le plan de référence, à la fois selon la direction d'extension du capteur, ici transversale, et selon la direction perpendiculaire, ici longitudinale. De préférence, en section par un plan perpendiculaire à la direction d'extension du capteur, ici transversale, l'intensité lumineuse reçue de la source lumineuse en tout point de la bande de vision du dispositif de captation dans le plan de référence ne varie pas de plus de 10% par rapport à une intensité maximale reçue en un point de la bande de vision du dispositif de captation dans le plan de référence.

La source lumineuse **38** pourrait être une source continue selon la direction d'extension du capteur, ici transversale, par exemple sous la forme d'un tube fluorescent. Toutefois, dans une forme de réalisation de l'invention, la source lumineuse comporte au moins une série de diodes alignées, auquel cas la source lumineuse **38** ne forme pas nécessairement une source parfaitement continue selon la direction d'extension du capteur. Dans un exemple de réalisation, les diodes présentent une dimension transversale comprise entre 1 et 5 mm, par exemple de 3 mm dans l'exemple illustré, et sont écartées les unes des autres, selon la direction transversale, d'une distance comprise entre 0.5 et 3 mm, par exemple 1 mm dans l'exemple illustré. Dans la mesure où ces diodes émettent chacune une lumière selon un cône d'émission, généralement supérieur à 30°, voire supérieur à 50°, et qu'elles sont situées à plus de 20 mm de la bande vision utile dans le plan de référence, on peut considérer que les flux lumineux fournis par chaque diode se chevauchent suffisamment au niveau de la bande de vision dans le plan de référence pour fournir un éclairage homogène dans la bande de vision.

La source lumineuse **38** du premier dispositif d'éclairage **36** émet une lumière dans le domaine optique, c'est-à-dire dans le domaine de l'infrarouge (750-3000 nm), du visible (400-750 nm), ou de l'ultraviolet (100-400 nm). Dans l'exemple illustré, la source lumineuse **38** du premier dispositif d'éclairage émet dans le domaine visible.

La source lumineuse **38** est par exemple réalisée sous la forme d'une série de diodes électroluminescentes alignées selon la direction transversale. Les diodes peuvent être des diodes émettant une lumière blanche. On peut aussi prévoir que la source lumineuse comporte trois alignements parallèles, selon la direction transversale, de séries de diodes de couleurs différentes, par exemple respectivement rouges, vertes et bleues qui, par combinaison, permettent d'obtenir une lumière blanche. En variante, la source lumineuse pourrait être monochromatique. La source lumineuse **38** pourrait être aussi un tube fluorescent.

La source **38** est positionnée de manière à être décalée selon la direction perpendiculaire à l'extension du capteur par rapport au plan optique principal **P0** du dispositif de captation **30.** En l'occurrence, dans un plan perpendiculaire à la direction transversale, le centre de la surface d'émission de la source lumineuse est décalé, selon la direction ici longitudinale, d'une distance supérieure à 1 mm et inférieure à 50 mm, par exemple entre 20 et 25 mm dans l'exemple illustré, par rapport au plan optique principal **P0.** Elle est aussi positionnée de manière à être décalée selon la direction verticale par rapport au plan de référence **PR,** du même côté que le dispositif de captation **30.** En l'occurrence, dans un plan perpendiculaire à la direction d'extension du capteur, le centre de la surface d'émission de la source lumineuse est décalé, selon la direction verticale, d'une distance supérieure à 5 mm et inférieure à 20 mm, par exemple entre 10 et 15 mm dans l'exemple illustré, par rapport au plan de référence **PR.** Avec ces conditions, la source **38** peut donc être positionnée à une distance comprise entre 20 et 30 millimètres de la ligne **L0** de la bande de vision dans le plan de référence.

Le premier dispositif d'éclairage **36** pourrait par ailleurs comporter des moyens de guidage de la lumière, tels que des miroirs de renvoi ou des guides optiques analogues à des fibres optiques, pour décaler la source lumineuse réelle par rapport à une source lumineuse virtuelle qui serait formée par le dernier élément de ces moyens de guidage. Dans ce cas, la source lumineuse virtuelle sera considérée comme la source lumineuse générant l'éclairage au niveau de la bande de vision.

Dans l'exemple illustré, le premier dispositif d'éclairage **36** comporte par ailleurs un cache **40** qui est interposé de manière à limiter, voire éviter un rayonnement lumineux direct entre la source lumineuse **38** et le dispositif de captation **30.** Bien entendu, le cache **40** ne perturbe pas la transmission directe de lumière entre la source lumineuse **38** et la bande de vision dans le plan de référence.

Dans la mesure où le premier dispositif d'éclairage **36** est embarqué sur le chariot **12,** avec le dispositif de captation **30,** la direction principale d'incidence de l'éclairage généré par le premier dispositif d'éclairage sur la bande de vision utile reste constante, lors du déplacement du bloc d'acquisition **26,** malgré le décalage de la bande de vision utile correspondant à ce déplacement. Ainsi, pour chaque image acquise par le dispositif d'acquisition, chaque image correspondant à une position du chariot **12,** l'éclairage fourni par le dispositif **38,** sur la bande de vision utile correspondant à la position du chariot, est identique pour chaque position. Ainsi, sur l'intégralité de la partie du plan de référence balayée par le bloc d'acquisition **26,** l'image globale acquise par le bloc d'acquisition est acquise sous une condition d'éclairage rasante constante. Cet éclairage rasant permet de mettre en valeur les microreliefs de la surface d'un objet placé dans le plan de référence, reliefs dont la dimension est de l'ordre du millimètre ou inférieure au millimètre. Dans le cas d'un objet dont la surface est constituée d'un matériau fibreux tel que du papier et du carton, l'éclairage rasant permet de grandement améliorer la visibilité, dans l'image acquise par le dispositif de captation, de la structure fibreuse du matériau. Cet éclairage rasant fourni par le premier dispositif d'éclairage **36** est particulièrement utile pour les matériaux dont la surface possède des propriétés de réflexion diffuse, c'est-à-dire lorsqu'une lumière incidente est réfléchie, sur cette surface, dans un grand nombre de directions.

L'appareil de numérisation comporte avantageusement un second dispositif d'éclairage **42** qui est lui aussi porté par le chariot **12** et étendu selon la direction d'extension du capteur, ici transversale. Le second dispositif d'éclairage **42** génère, dans le champ de vision du dispositif de captation **30** dans le plan de référence **PR,** un second éclairage ayant une seconde direction principale d'incidence **d2** distincte de la première direction d'incidence **d1** et non symétrique à celle-ci par rapport au plan optique principal **P0.**

La seconde direction principale d'incidence **d2** est la direction d'incidence, dans le champ de vision du dispositif de captation **30** dans le plan de référence **PR,** selon laquelle l'intensité lumineuse émise par le second dispositif d'éclairage est maximale.

De préférence, la seconde direction principale d'incidence **d2** est perpendiculaire au plan de référence **PR.** En l'occurrence, cette seconde direction principale d'incidence est donc aussi perpendiculaire à la direction de déplacement. On considérera que la direction principale d'incidence est perpendiculaire au plan de référence **PR** si elle forme avec celui-ci, un angle compris entre 80 et 100°.

De préférence, le premier **36** et le second **42** dispositifs d'éclairage sont mis en oeuvre indépendamment l'un de l'autre. Pour cela, le premier et le second dispositif d'éclairage peuvent mettre en œuvre des sources lumineuses distinctes, comme dans l'exemple illustré où l'on voit que le second dispositif d'éclairage **42** comporte sa propre source lumineuse **44.** En variante, une même source pourrait être utilisée pour le premier **36** et le second **42** dispositifs d'éclairage, avec des moyens de basculement de la lumière émise vers un premier moyen de guidage de la lumière ou vers un second moyen de guidage de la lumière, ou avec des moyens d'occultation contrôlables interposés dans deux trajectoires de guidage.

Dans l'exemple illustré, l'éclairage reçu par une surface située dans le plan de référence **PR,** dont la lumière est émise par le second dispositif d'éclairage, est un éclairage qui présente un gradient d'intensité dans le sens longitudinal, de part et d'autre d'un plan optique principal **P0** du dispositif de captation **30.** En considérant la **figure 2****,** cela revient à dire que, dans le plan de référence **PR,** en se déplaçant le long de la surface externe **29,** selon une direction perpendiculaire à la direction d'extension du capteur, mais pour une position longitudinale donnée du second dispositif d'éclairage, l'intensité de l'éclairage reçu en chaque point varie, en augmentation ou en diminution.

De préférence, le gradient d'intensité est continu de part et d'autre du plan optique principal **P0** du dispositif de captation **30,** donc de part et d'autre de la ligne **L0.** Cette variation peut être une augmentation ou une diminution. De préférence, le gradient est un gradient continu au sens que l'intensité d'éclairage varie continument avec la position selon la direction longitudinale dans la bande de vision utile. Par cette continuité, il n'y a pas de saut brutal d'intensité, qui se traduirait par la présence d'une ligne de séparation nette entre une zone plus éclairée et une zone moins éclairée. Cependant, en variante, on pourrait prévoir que le gradient soit discontinu, avec un ou plusieurs paliers d'intensité clairement démarqués.

Avantageusement, le second dispositif d'éclairage comporte une lame de réflexion **46** qui renvoie vers le plan de référence **PR** au moins une partie d'un flux lumineux émis par la source lumineuse **44** du second dispositif d'éclairage **42.** Dans l'exemple illustré sur la **figure 2****,** la lame de réflexion **46** est une lame partiellement réfléchissante, à deux faces parallèles, par exemple semi-réfléchissante. En effet, dans cet exemple de réalisation, la lame **46** est interposée dans le trajet optique entre le dispositif de captation **30** et sa bande de vision utile dans le plan de référence **PR.** De la sorte, il est nécessaire que la lame **46** soit au moins partiellement transparente pour permettre au dispositif de captation **30** de capter l'image de la bande de vision utile, au travers de la lame réfléchissante. La lame réfléchissante est ici agencée de telle sorte que sa surface supérieure réfléchissante **48,** tournée vers le plan de référence **PR,** s'étende dans un plan transversal incliné à 45° par rapport à la direction longitudinale. Elle est ainsi capable de renvoyer un flux lumineux incident, dont la direction principale est longitudinale, sous la forme d'un flux lumineux réfléchi dont la direction principale est sensiblement perpendiculaire au plan de référence, dans la direction de celui-ci.

Dans l'exemple illustré, le flux lumineux est créé par une source lumineuse **44** qui a une étendue selon la direction d'extension du capteur. La source lumineuse **44** peut être identique ou similaire à l'une quelconque des variantes de réalisations décrites au sujet de la source lumineuse **38** du premier dispositif d'éclairage **36.** Toutefois, dans la mesure où cette seconde source lumineuse **44** présente une direction principale d'émission déterminable, celle-ci est de préférence orientée selon la direction de déplacement.

Dans l'exemple illustré, la seconde source lumineuse **44** éclaire le plan de référence au travers d'un diffuseur **52,** de sorte que l'éclairage fourni par le second dispositif d'éclairage **42** est un éclairage diffus, c'est-à-dire que la répartition spatiale du flux lumineux émis par la source lumineuse et traversant le diffuseur est plus étendue qu'en l'absence du diffuseur.

Dans l'exemple illustré, la seconde source lumineuse **44** est agencée dans un caisson dont la forme en section dans un plan perpendiculaire à la direction transversale est sensiblement rectangulaire, avec deux parois longues d'orientation transversale et longitudinale, opaques, et deux parois courtes d'orientation verticale. Une des parois courtes d'orientation transversale et longitudinale, dite paroi de fond **50,** peut servir de support pour la source lumineuse **44.** Elle peut être opaque. La paroi de fond **50** est la paroi la plus éloignée du caisson par rapport au plan optique principal **P0** selon la direction longitudinale.

L'autre paroi verticale, du côté du plan optique principal **P0** est une paroi translucide diffusante, formant le diffuseur **52** à travers lequel la lumière émise par la source lumineuse **44** est susceptible de sortir du caisson, en direction du plan de référence **PR,** après réflexion sur la lame de réflexion **46** si une telle lame est prévue. Le diffuseur **52** est ici réalisé sous la forme d'une lame à faces parallèles de matériau translucide diffusant. La lame peut-être une lame de verre. Le caractère diffusant du matériau peut provenir d'un traitement de surface d'au moins une des faces de la lame ou peut provenir d'une caractéristique intrinsèque du matériau. La lame peut par exemple être en verre meulé ou en verre opale, ou en matériau polymère translucide tel que du polyméthacrylate de méthyle traité pour être translucide. La lame peut par exemple présenter une épaisseur comprise entre 0.1 et 5 mm, par exemple 2,5 mm dans l'exemple illustré. Dans l'exemple illustré, la face externe du diffuseur **52,** qui est la plus proche du plan optique principal **P0,** est agencée à une distance comprise entre 5 et 50 mm, de préférence entre 10 et 30 mm, du plan optique principal **P0** selon la direction longitudinale.

En variante, le diffuseur **52** peut comprendre un diffuseur holographique qui diffracte la lumière, qui permet notamment d'atteindre des rendements de transmission de 90 % ou plus. De plus, le diffuseur holographique permet d'homogénéiser la lumière en modifiant localement la distribution de l'énergie lumineuse, redirigeant chaque partie du faisceau de manière à obtenir l'illumination optimale, en intensité et en localisation.

La seconde source lumineuse **44** peut être de type lambertien, considérée comme une source de lumière uniforme angulairement, ou orthotrope, c'est-à-dire une source dont la luminance énergétique est la même dans toutes les directions.

Pour créer un gradient d'éclairage au niveau du plan de référence **PR,** de part et d'autre de la ligne transversale de référence **L0**, on a prévu un agencement particulier de la source lumineuse **44** par rapport au plan optique principal **P0,** ou, en l'occurrence, par rapport à l'image de ce plan optique principal **P0** par réflexion sur la lame réfléchissante **46.** En l'espèce on voit effectivement que l'on peut définir, par réflexion sur la lame réfléchissante **46,** un plan optique principal virtuel **P'0** qui, du fait de l'orientation à 45° de la lame **46** par rapport au plan optique principal **P0,** est un plan transversal et longitudinal qui coupe le plan optique principal **P0** à l'intersection **I** de ce plan principal optique **P0** avec la surface réfléchissante **48** de la lame réfléchissante **46.** On peut voir sur la **figure 2** que la source lumineuse **44,** par exemple constituée d'une série de diodes électroluminescentes agencées selon la direction transversale, est décalée selon la direction verticale par rapport au plan optique principal virtuel **P'0.** Dans l'exemple illustré, la seconde source lumineuse **44** présente une direction principale d'émission **DE2,** correspondant ici à la direction centrale du cône d'émission, orientée selon la direction longitudinale en direction de la surface réfléchissante **48.** Cette direction principale d'émission **DE2** définit, du fait de l'étendue transversale de la seconde source lumineuse **44,** un plan d'émission principal transversal et longitudinal passant par le centre de la surface d'émission de la source lumineuse **44.** On voit que cette direction principale d'émission **DE2,** et donc le plan d'émission principal, sont sensiblement parallèles au plan optique principal virtuel **P'0** et décalés de celui-ci selon la direction verticale. Il s'ensuit que, après réflexion sur la lame semi-réfléchissante **46,** la direction principale d'émission est sensiblement parallèle au plan optique principal **P0,** et décalée de celui-ci selon la direction longitudinale.

De préférence, la surface interne du diffuseur **52** est agencée à une certaine distance de la seconde source lumineuse **44** selon la direction principale d'émission de la seconde source lumineuse **44,** par exemple à une distance comprise entre 0,1 mm et 30 mm, de préférence comprise entre 2 mm et 10 mm. Cela renforce le caractère diffus de l'éclairage généré dans le plan de référence.

Grâce à ces dispositions, le second dispositif d'éclairage **42** génère, dans le plan de référence **PR,** un éclairage qui présente un plan principal **P'E2,** image du plan principal d'émission de la seconde source **44** par réflexion sur la lame **46.** Le plan principal d'éclairage **P'E2** s'étend selon la direction d'extension du capteur, ici la direction transversale, et coupe le plan de référence **PR** selon une ligne **LMAX** qui est décalée longitudinalement par rapport à la ligne transversale de référence **L0** d'intersection entre le pian de référence **PR** et le plan optique principal **P0** du dispositif de captation. La ligne **LMAX** peut correspondre à une ligne d'intensité d'éclairage maximal du plan de référence par le second dispositif d'éclairage **42.** La seconde direction principale d'incidence **d2** du second dispositif d'éclairage est contenue dans le plan principal d'éclairage **P'E2.** La seconde direction principale d'incidence **d2** du second dispositif d'éclairage peut être considérée comme la trace du plan principal d'éclairage **P'E2** dans un plan perpendiculaire à la direction d'extension du capteur.

En résumé, le second dispositif d'éclairage **42** comprend une source lumineuse **44** présentant un plan principal d'émission qui, après réflexion sur la lame de réflexion **46,** génère un plan principal d'éclairage qui est décalé longitudinalement par rapport au plan optique principal du dispositif de captation.

Dans l'exemple illustré, le plan optique principal virtuel **P'0** intercepte le diffuseur **52** du caisson du second dispositif d'éclairage **42.** Il est par exemple décalé du plan de référence d'une distance comprise entre 1 mm et 30 mm, par exemple 22 mm dans l'exemple illustré. Le plan principal d'émission de la seconde source lumineuse **44** est lui aussi parallèle au plan de référence et décalé de celui-ci d'une distance comprise entre 0.1 et 30 millimètres, par exemple 15 mm dans l'exemple illustré. Ces gammes de valeurs ont permis d'obtenir un gradient d'intensité satisfaisant pour les besoins de l'invention.

En fonction de la pente du gradient d'intensité de l'éclairage fournit par le second dispositif **42,** la position du plan principal d'éclairement **P'E2** peut être rapprochée ou éloignée du plan optique principal **P0** selon la direction longitudinale. Le second dispositif d'éclairage **42** sera avantageusement mis en œuvre pour acquérir à l'image de la surface d'un objet lorsque cette surface présente un caractère spéculaire.

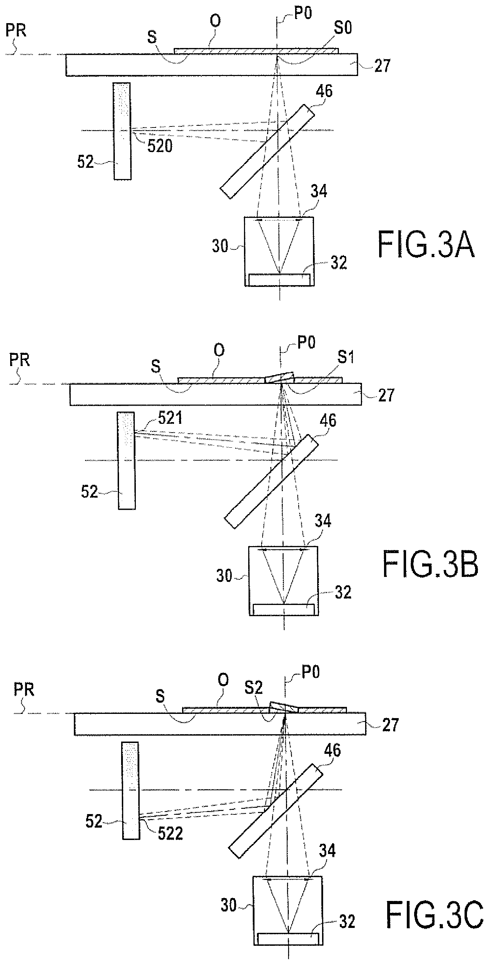

L'intérêt technique du gradient d'intensité lumineuse dans le plan de référence, de part et d'autre de la bande de vision, apparaît plus clairement au vu des **figures 3A** à **3C****,** sur lesquelles des éléments identiques ou similaires à ceux qui ont été décrits ci-dessus sont désignés par les mêmes références et ne seront donc pas décrits en détail. Sur ces figures, on a illustré, non pas l'éclairage dans le plan de référence **PR,** mais le gradient d'intensité lumineuse émis par le diffuseur **52,** qui en est l'image par la réflexion sur la lame semi-réfléchissante **46.** On voit donc que le diffuseur **52** est plus sombre au fur et à mesure que l'on se rapproche du plan de référence, selon la direction verticale de la surface externe du diffuseur, et au contraire plus clair donc plus lumineux lorsqu'on s'en éloigne selon la direction verticale.

Sur la **figure 3A****,** on a illustré, dans un premier plan de coupe, perpendiculaire à la direction transversale, un objet **O** dont une surface **S** est plaquée contre la face externe de la vitre **27,** c'est-à-dire en coïncidence avec le plan de référence **PR.** L'illustration est schématique, sans prise en compte d'un éventuel effet de décalage dû à la présence de la lame séparatrice pour en simplifier la description. Dans ce premier plan de coupe, un élément de surface **S0** de cette surface **S** est vu par le capteur **32** au travers du dispositif d'exposition optique **34.** Cet élément de surface **S0** est considéré comme spéculaire et perpendiculaire au plan optique principal **P0** du dispositif de captation **30.** Comme illustré sur la **figure 3A****,** le capteur **32** voit, par réflexion sur l'élément de surface **S0,** un élément de surface **520** du diffuseur.

Sur la **figure 3B****,** on a illustré un deuxième plan de coupe dans lequel l'élément de surface **S1** qui est vu par le capteur n'est pas orienté parfaitement perpendiculairement au plan optique principal **P0.** On comprend que, par simple construction géométrique, le capteur **32** voit, par réflexion sur l'élément de surface **S1,** un élément de surface **521** du diffuseur **52** qui est décalé selon la direction verticale, en l'occurrence vers le haut, par rapport à l'élément de surface **520** de la **figure 3A****.** Cet élément de surface **521** est plus sombre, de sorte que, en comparaison avec l'élément de surface **S0,** l'élément de surface **S1** sera vu par le capteur comme étant plus sombre.

Sur la **figure 3C****,** on a illustré un troisième plan de coupe dans lequel l'élément de surface **S2** qui est vu par le capteur n'est pas orienté parfaitement perpendiculairement au plan optique principal **P0.** L'élément de surface **S2** présente un décalage d'orientation inverse par rapport à celui de l'élément de surface **S1** illustré sur la **figure 3B****.** On comprend que, par simple construction géométrique, le capteur **32** voit, par réflexion sur l'élément de surface **S2,** un élément de surface **522** du diffuseur **52** qui est décalé selon la direction verticale, en l'occurrence vers le bas, par rapport à l'élément de surface **520** de la **figure 3A****.** Cet élément de surface **522** est plus clair, de sorte que, en comparaison avec l'élément de surface **S0,** l'élément de surface **S2** sera vu par le capteur comme étant plus clair, et bien entendu encore plus clair que l'élément de surface **S1.**

Ces schémas illustrent que, lorsqu'une image est prise par le capteur **32** de la bande de vision utile, donc de la portion correspondante de la surface **S** d'un objet, des variations d'orientation des éléments de surface, vues respectivement par les différentes cellules photoélectriques du capteur dans la bande de vision, se traduiront par des variations correspondantes de l'intensité lumineuse dans l'image acquise.

On remarque que le premier dispositif d'éclairage **36** et le second dispositif d'éclairage **42** sont situés tous les deux au-dessus d'un plan perpendiculaire au plan optique principal **P0** et comprenant l'extrémité terminale du dispositif de captation **30.**

Avantageusement, le premier dispositif d'éclairage **36** et le second dispositif d'éclairage **42** sont situés chacun d'un côté du plan optique principal **P0** du dispositif de captation **30.**

Lors de l'acquisition de l'image numérique de la surface d'un objet, l'appareil est contrôlé de préférence pour activer l'un ou l'autre du premier et du second dispositif d'éclairage. Le choix est notamment fait en fonction du caractère spéculaire ou diffusant de la réflexion sur la surface de l'objet dont on veut acquérir l'image. Ce choix peut être effectué par un opérateur de l'appareil, ou il peut être fait par l'appareil selon un algorithme de détermination. Cet algorithme de détermination peut être basé sur une comparaison de deux images tests d'une partie de la surface, prises l'une avec le premier dispositif d'éclairage et l'autre avec le second dispositif d'éclairage. L'appareil peut aussi être programmé pour acquérir systématiquement deux images complètes de la surface prises l'une avec le premier dispositif d'éclairage et l'autre avec le second dispositif d'éclairage. Ces deux images peuvent par exemple être acquises l'une lors d'un trajet aller du chariot **12** et l'autre lors d'un trajet retour du chariot **12.**

Dans tous les cas, un appareil muni de deux dispositifs d'éclairage ayant des directions principales d'éclairage différentes pourra optimiser, quelle que soit la nature de la réflexion de la surface de l'objet, la qualité de l'image acquise en vue de déterminer la caractéristique structurelle recherchée.

Par ailleurs, l'appareil de numérisation selon l'invention permet d'acquérir une image de grandes dimensions. De manière intéressante, ces grandes dimensions de l'image permettent de ne pas avoir à identifier de manière précise, sur l'objet, la portion de la surface de l'objet dont on veut réellement acquérir la caractéristique structurelle. Au contraire, l'intégralité de la surface de l'objet, ou au moins une grande partie de celle-ci peut être acquise, et l'identification précise de la portion de surface d'intérêt peut être traitée plus en aval dans la chaine de traitement. L'opérateur n'a ainsi pas à se préoccuper de l'emplacement exact d'une portion de surface d'intérêt, ni même à connaitre cet emplacement, ce qui peut encore renforcer la sécurité du procédé d'authentification mis en œuvre grâce à l'appareil selon l'invention.

On notera qu'en mettant en œuvre un bloc d'acquisition basé sur la technologue CIS, avec défilement du bloc d'acquisition **26** par déplacement du chariot **12,** le bloc d'acquisition **26** peut être placé très près de la surface de l'objet à numériser. Il en résulte que l'encombrement de l'appareil de numérisation selon l'invention, selon la direction « verticale », peut être inférieur à 150 mm, voir inférieur à 100 mm. Un dispositif d'acquisition de type caméra nécessiterait, pour obtenir une image d'une surface de 400 mm par 400 mm un recul beaucoup plus important, par exemple un recul de l'ordre de 700 mm, donc un encombrement plus important selon la direction « verticale ».

L'invention n'est pas limitée aux exemples décrits et représentés car diverses modifications peuvent y être apportées sans sortir de son cadre. Notamment, comme évoqué plus haut, les différentes caractéristiques et variantes décrites en détail, notamment concernant le dispositif de captation, le bloc d'acquisition et les différents dispositifs d'éclairage, peuvent être intégrées dans un appareil de numérisation du type dans lequel l'objet à scanner est mobile devant un bloc d'acquisition considéré fixe, comme illustré à titre d'exemple à la **figure 4****,** que le dispositif de déplacement relatif soit intrinsèque ou extrinsèque à l'appareil de numérisation.

## Revendications

1. Appareil de numérisation pour acquérir une image numérique d'une surface d'un objet, du type dans lequel est assuré un déplacement relatif, selon une direction de déplacement, d'un objet à scanner par rapport à au moins un bloc d'acquisition (**26**) ayant :
- un dispositif de captation (**30**) comprenant au moins un capteur optique (**32**) ayant une pluralité de cellules optiques agencées selon une direction d'extension du capteur, distincte de la direction de déplacement et définissant, avec la direction de déplacement, l'orientation d'un plan de référence (**PR**);
- un dispositif d'éclairage,
du type dans lequel l'appareil de numérisation comporte un premier dispositif d'éclairage (**36**) qui génère, dans un champ de vision du dispositif de captation dans le plan de référence (**PR**), un premier éclairage ayant une première direction principale d'incidence formant, dans un plan perpendiculaire à la direction d'extension du capteur, un angle (**AR**) inférieur à 45 degrés par rapport au plan de référence (**PR**), de préférence inférieur à 25 degrés, plus préférentiellement inférieur à 20 degrés,
et du type dans lequel l'appareil comporte un second dispositif d'éclairage (**44**) qui génère, dans le champ de vision du dispositif de captation dans le plan de référence, un second éclairage ayant une seconde direction principale d'incidence distincte de la première direction d'incidence et non symétrique à celle-ci par rapport à un plan optique principal (**P0**) du dispositif de captation (**30**)
**caractérisé en ce que** le second dispositif d'éclairage (**42**) génère, dans le plan de référence (**PR**), un éclairage qui présente un plan principal (**P'E2**) qui s'étend selon la direction d'extension du capteur et qui coupe le plan de référence selon un segment de ligne (**LMAX**) qui est décalé par rapport à une ligne (**L0**) d'intersection entre le plan de référence (**P0**) et le plan optique principal (**P0**) du dispositif de captation (**30**).

2. Appareil de numérisation selon la revendication 1, **caractérisé en ce que** la première direction principale d'incidence forme, dans un plan perpendiculaire à la direction d'extension du capteur, un angle (**AR**) supérieur à 10 degrés par rapport au plan de référence (**PR**), de préférence supérieur à 16 degrés.

3. Appareil de numérisation selon l'une des revendications 1 ou 2, **caractérisé en ce que** la seconde direction principale d'incidence du second éclairage est perpendiculaire au plan de référence (**PR**).

4. Appareil de numérisation selon l'une des revendications 1 à 3, **caractérisé en ce que** le second dispositif d'éclairage génère, dans le plan de référence (**PR**), un éclairage qui présente un gradient d'intensité selon la direction de déplacement, de part et d'autre du plan optique principal (**P0**) du dispositif de captation (**30**).

5. Appareil de numérisation selon la revendication 4, **caractérisé en ce que** le gradient d'intensité est continu de part et d'autre du plan optique (**P0**) principal du dispositif de captation (**30**).

6. Appareil de numérisation selon l'une des revendications 1 à 5, **caractérisé en ce que** le second dispositif d'éclairage (**42**) comporte une lame de réflexion (**46**) qui renvoie vers le plan de référence (**PR**), selon la seconde direction principale d'incidence (**P'E2**), au moins une partie d'un flux lumineux émis par la source lumineuse (**44**) du second dispositif d'éclairage (**42**).

7. Appareil de numérisation selon la revendication 5, **caractérisé en ce que** le second dispositif d'éclairage (**42**) comprend une source lumineuse (**44**) présentant un plan d'émission principal qui, après réflexion sur la lame de réflexion (**46**), est décalé selon la direction de déplacement par rapport au plan optique principal (**P0**) du dispositif de captation (**30**).

8. Appareil de numérisation selon l'une des revendications précédentes, **caractérisé en ce que** le premier dispositif d'éclairage (**36**) et/ou le second dispositif d'éclairage (**42**) est fixe par rapport au dispositif de captation (**30**).

9. Appareil de numérisation selon l'une des revendications précédentes, **caractérisé en ce que** le dispositif de captation (**30**) comporte un dispositif d'exposition optique (**34**) qui conjugue optiquement le capteur (**32**) avec le plan de référence (**PR**), et **en ce que** le dispositif d'exposition optique (**34**) comporte une série de dispositifs d'exposition optique élémentaires dont chacun est associé à une cellule du capteur (**32**).

10. Appareil de numérisation selon l'une des revendications précédentes, **caractérisé en ce qu'**il comporte au moins un premier bloc d'acquisition (**26**) et un second bloc d'acquisition (**26**) qui sont agencés parallèlement en étant décalés selon la direction de déplacement et/ou selon la direction d'extension du capteur.

11. Appareil de numérisation selon la revendication 10, **caractérisé en ce que** les deux blocs d'acquisition (**26**) présentent des portions de recoupement qui sont en vis-à-vis l'une de l'autre selon la direction de déplacement.

12. Appareil de numérisation selon l'une des revendications 1 à 11, **caractérisé en ce que** l'appareil comporte un châssis (**11**), un chariot (**12**) monté mobile et entraîné par rapport au châssis selon la direction de déplacement, et **en ce que** le bloc d'acquisition est porté par le chariot, **en ce qu'**il comporte une vitre (**27**) qui est fixe par rapport au châssis (**11**) et qui comporte une face supérieure (**29**) qui coïncide avec le plan de référence (**PR**), et **en ce que** la vitre (**27**) comporte un traitement antireflets.

13. Appareil de numérisation selon l'une des revendications précédentes, **caractérisé en ce que** le dispositif de captation présente au moins un plan optique principal (**PO**), et **en ce que** le plan optique principal (**PO**) forme, dans un plan perpendiculaire au plan de référence (**PR**) et orienté selon la direction de déplacement, un angle aigu supérieur à 45 degrés par rapport à la direction longitudinale de déplacement, de préférence supérieur à 80 degrés.

14. Appareil de numérisation selon l'une des revendications précédentes, **caractérisé en ce que** le dispositif de captation présente au moins un plan optique principal (**PO**), et **en ce que** le plan optique principal forme, dans un plan perpendiculaire au plan de référence (**PR**) et orienté selon la direction de déplacement, un angle aigu supérieur à 45 degrés et inférieur à 80 degrés, par rapport à la direction longitudinale de déplacement.

15. Appareil de numérisation selon la revendication 14, **caractérisé en ce que** le dispositif de captation et le deuxième dispositif d'éclairage (**36**) sont agencés respectivement de part et d'autre d'un plan perpendiculaire au plan de référence (**PR**), parallèle à la direction d'extension du capteur et contenant une intersection du plan optique principal (**P0**) avec le plan de référence (**PR**).

## Patentansprüche

1. Digitalisierungsvorrichtung zum Erfassen eines digitalen Bildes einer Oberfläche eines Gegenstands
des Typs, bei dem eine relative Bewegung eines abzutastenden Gegenstands in einer Bewegungsrichtung in Bezug auf mindestens einen Erfassungsblock (26) sichergestellt ist, umfassend:
- eine Erfassungsvorrichtung (30), die mindestens einen optischen Sensor (32) aufweist, der mehrere optische Zellen aufweist, die in einer von der Erstreckungsrichtung des Sensors angeordnet sind, die von der Bewegungsrichtung verschieden ist, und mit der Bewegungsrichtung die Ausrichtung einer Bezugsebene (PR) definieren,
- eine Beleuchtungsvorrichtung,
des Typs, bei dem Digitalisierungsvorrichtung eine erste Beleuchtungsvorrichtung (36) aufweist, die in einem Sichtfeld der Erfassungsvorrichtung in der Bezugsebene (PR) eine erste Beleuchtung erzeugt, die eine erste Haupteinfallsrichtung aufweist, die in einer Ebene senkrecht zur Erstreckungsrichtung des Sensors einen Winkel (AR) von weniger als 45 Grad in Bezug auf die Bezugsebene (PR), vorzugsweise von weniger als 25 Grad, insbesondere von weniger als 20 Grad bildet, und
des Typs, bei dem die Vorrichtung eine zweite Beleuchtungsvorrichtung (44) aufweist, die in dem Sichtfeld der Erfassungsvorrichtung in der Bezugsebene eine zweite Beleuchtung, die eine zweite Haupteinfallsrichtung aufweist, die von der ersten Einfallsrichtung verschieden ist und zu dieser nicht symmetrisch ist, in Bezug auf eine optische Hauptebene (P0) der Erfassungsvorrichtung (30) erzeugt,
**dadurch gekennzeichnet, dass** die zweite Beleuchtungsvorrichtung (42) in der Bezugsebene (PR) eine Beleuchtung erzeugt, die eine Hauptebene (P'E2) aufweist, die sich in der Erstreckungsrichtung des Sensors erstreckt und die die Bezugsebene entlang eines Liniensegments (LMAX) schneidet, das in Bezug auf eine Schnittlinie (L0) zwischen der Bezugsebene (P0) und der optischen Hauptebene (P0) der Erfassungsvorrichtung (30) versetzt ist.

2. Digitalisierungsvorrichtung gemäß Anspruch 1, **dadurch gekennzeichnet, dass** die erste Haupteinfallsrichtung in einer Ebene senkrecht zur Erstreckungsrichtung des Sensors einen Winkel (AR) von mehr als 10 Grad in Bezug auf die Bezugsebene (PR), vorzugsweise von mehr als 16 Grad bildet.

3. Digitalisierungsvorrichtung gemäß einem der Ansprüche 1 oder 2, **dadurch gekennzeichnet, dass** die zweite Haupteinfallsrichtung der zweiten Beleuchtung senkrecht zu der Bezugsebene (PR) ist.

4. Digitalisierungsvorrichtung gemäß einem der Ansprüche 1 bis 3, **dadurch gekennzeichnet, dass** die zweite Beleuchtungsvorrichtung in der Bezugsebene (PR) eine Beleuchtung erzeugt, die einen Intensitätsgradienten in der Bewegungsrichtung auf beiden Seiten der optischen Hauptebene (P0) der Erfassungsvorrichtung (30) aufweist.

5. Digitalisierungsvorrichtung gemäß Anspruch 4, **dadurch gekennzeichnet, dass** der Intensitätsgradient auf beiden Seiten der optischen Hauptebene (P0) der Erfassungsvorrichtung (30) kontinuierlich ist.

6. Digitalisierungsvorrichtung gemäß einem der Ansprüche 1 bis 5, **dadurch gekennzeichnet, dass** die zweite Beleuchtungsvorrichtung (42) eine Reflexionsklinge (46) aufweist, die mindestens einen Teil eines Lichtstroms, der von der Lichtquelle (44) der zweiten Beleuchtungsvorrichtung (42) emittiert wird, in Richtung der Bezugsebene (PR) in der zweiten Haupteinfallsrichtung (P'E2) zurückschickt.

7. Digitalisierungsvorrichtung gemäß Anspruch 5, **dadurch gekennzeichnet, dass** die zweite Beleuchtungsvorrichtung (42) eine Lichtquelle (44) aufweist, die eine Hauptemissionsebene aufweist, die nach der Reflexion auf der Reflexionsklinge (46) in der Bewegungsrichtung in Bezug auf die optische Hauptebene (P0) der Erfassungsvorrichtung (30) versetzt ist.

8. Digitalisierungsvorrichtung gemäß einem der vorhergehenden Ansprüche, **dadurch gekennzeichnet, dass** die erste Beleuchtungsvorrichtung (36) und/oder die zweite Beleuchtungsvorrichtung (42) in Bezug auf die Erfassungsvorrichtung (30) fest ist.

9. Digitalisierungsvorrichtung gemäß einem der vorhergehenden Ansprüche, **dadurch gekennzeichnet, dass** die Erfassungsvorrichtung (30) eine optische Belichtungsvorrichtung (34) ist, die den Sensor (32) mit der Bezugsebene (PR) optisch konjugiert, und dadurch, dass die optische Belichtungsvorrichtung (34) eine Reihe von grundlegenden optischen Belichtungsvorrichtungen aufweist, wovon jede einer Zelle des Sensors (32) zugeordnet ist.

10. Digitalisierungsvorrichtung gemäß einem der vorhergehenden Ansprüche, **dadurch gekennzeichnet, dass** sie mindestens einen ersten Erfassungsblock (26) und einen zweiten Erfassungsblock (26) aufweist, die parallel angeordnet sind und dabei in der Bewegungsrichtung und/oder in der Erstreckungsrichtung des Sensors versetzt sind.

11. Digitalisierungsvorrichtung gemäß Anspruch 10, **dadurch gekennzeichnet, dass** die beiden Erfassungsblöcke (26) Überschneidungsabschnitte aufweisen, die in der Bewegungsrichtung einander gegenüberliegend sind.

12. Digitalisierungsvorrichtung gemäß einem der Ansprüche 1 bis 11, **dadurch gekennzeichnet, dass** die Vorrichtung einen Rahmen (11), einen Schlitten (12) aufweist, der beweglich angebracht ist und in Bezug auf den Rahmen in der Bewegungsrichtung angetrieben wird, und dadurch, dass der Erfassungsblock von dem Schlitten getragen ist, und dadurch, dass sie eine Glasscheibe (27) aufweist, die in Bezug auf den Rahmen (11) befestigt ist und die eine Oberseite (29) aufweist, die mit der Bezugsebene (PR) zusammenfällt, und dadurch, dass die Glasscheibe (27) eine Antireflexbehandlung aufweist.

13. Digitalisierungsvorrichtung gemäß einem der vorhergehenden Ansprüche, **dadurch gekennzeichnet, dass** die Erfassungsvorrichtung mindestens eine optische Hauptebene (P0) aufweist und dadurch, dass die optische Hauptebene (P0) in einer Ebene, die senkrecht zu der Bezugsebene (PR) ist und in der Bewegungsrichtung ausgerichtet ist, einen spitzen Winkel bildet, der größer als 45 Grad in Bezug auf die Längsbewegungsrichtung, vorzugsweise größer als 80 Grad ist.

14. Digitalisierungsvorrichtung gemäß einem der vorhergehenden Ansprüche, **dadurch gekennzeichnet, dass** die Erfassungsvorrichtung mindestens eine optische Hauptebene (P0) aufweist und dadurch, dass die optische Hauptebene in einer Ebene, die senkrecht zu der Bezugsebene (PR) ist und in der Bewegungsrichtung ausgerichtet ist, einen spitzen Winkel bildet, der größer als 45 Grad und kleiner als 80 Grad in Bezug auf die Längsbewegungsrichtung ist.

15. Digitalisierungsvorrichtung gemäß Anspruch 14, **dadurch gekennzeichnet, dass** die Erfassungsvorrichtung und die zweite Beleuchtungsvorrichtung (36) jeweils auf beiden Seiten einer Ebene, die senkrecht zu der Bezugsebene (PR) ist, angeordnet sind, die parallel zu der Erstreckungsrichtung des Sensors ist und einen Schnittpunkt der optischen Hauptebene (P0) mit der Bezugsebene (PR) enthält.

## Claims

1. A digitizing apparatus for acquiring a digital image of a surface of an object, of the type in which a relative displacement is ensured, along a direction of displacement, of an object to be scanned relative to at least one acquisition block (**26**) having:
- a capture device (**30**) comprising at least one optical sensor (**32**) having a plurality of optical cells arranged along a direction of extension of the sensor, distinct from the direction of displacement and defining, with the direction of displacement, the orientation of a reference plane (**PR**);
- a lighting device
of the type in which the digitizing apparatus includes a first lighting device (**36**) which generates, in a field of view of the capture device in the reference plane (**PR**), a first lighting having a first main direction of incidence forming, in a plane perpendicular to the direction of extension of the sensor, an angle (**AR**) less than 45 degrees with respect to the reference plane (**PR**), preferably less than 25 degrees, more preferably less than 20 degrees,
and of the type in which the apparatus includes a second lighting device (**44**) which generates, in the field of view of the capture device in the reference plane, a second lighting having a second main direction of incidence distinct from the first direction of incidence and not symmetrical thereto with respect to a main optical plane (**P0**) of the capture device (**30**),
**characterized in that** the second lighting device (**42**) generates, in the reference plane (**PR**), a lighting which has a main plane (**P'E2**) which extends along the direction of extension of the sensor and which intersects the reference plane along a line segment (**LMAX**) which is offset from a line (**L0**) of intersection between the reference plane (**PR**) and the main optical plane (**P0**) of the capture device (30).

2. The digitizing apparatus according to claim 1, **characterized in that** the first main direction of incidence forms, in a plane perpendicular to the direction of extension of the sensor, an angle (**AR**) greater than 10 degrees with respect to the reference plane (**PR**), preferably greater than 16 degrees.

3. The digitizing apparatus according to any of claims 1 or 2, **characterized in that** the second main direction of incidence of the second lighting is perpendicular to the reference plane (**PR**).

4. The digitizing apparatus according to any of claims 1 to 3, **characterized in that** the second lighting device generates, in the reference plane (PR), a lighting that has an intensity gradient along the direction of displacement, on either side of the main optical plane (**P0**) of the capture device (**30**).

5. The digitizing apparatus according to claim 4, **characterized in that** the intensity gradient is continuous on either side of the main optical plane (**P0**) of the capture device (**30**).

6. The digitizing apparatus according to any of claims 1 to 5, **characterized in that** the second lighting device (**42**) includes a reflection blade (**46**) which returns to the reference plane (**PR**), along the second main direction of incidence (**P'E2**), at least part of a luminous flux emitted by the light source (**44**) of the second lighting device (**42**).

7. The digitizing apparatus according to claim 5, **characterized in that** the second lighting device (**42**) comprises a light source (**44**) having a main emission plane which, after reflection on the reflection blade (**46**), is offset along the direction of displacement with respect to the main optical plane (**P0**) of the capture device (**30**).

8. The digitizing apparatus according to any of the preceding claims, **characterized in that** the first lighting device (**36**) and/or the second lighting device (**42**) is fixed relative to the capture device (**30**).

9. The digitizing apparatus according to any of the preceding claims, **characterized in that** the capture device (**30**) includes an optical exposure device (**34**) which optically conjugates the sensor (**32**) with the reference plane (**PR**), and **in that** the optical exposure device (**34**) includes a series of elementary optical exposure devices, each of which being associated with a cell of the sensor (**32**).

10. The digitizing apparatus according to any of the preceding claims, **characterized in that** it includes at least a first acquisition block (**26**) and a second acquisition block (**26**) which are arranged in parallel by being offset along the direction of displacement and/or along the direction of extension of the sensor.

11. The digitizing apparatus according to claim 10, **characterized in that** the two acquisition blocks (**26**) have overlapping portions which are opposite each other along the direction of displacement.

12. The digitizing apparatus according to any of claims 1 to 11, **characterized in that** the apparatus includes a frame (**11**), a carriage (**12**) movably mounted and driven relative to the frame along the direction of displacement, and **in that** the acquisition block is carried by the carriage, **in that** it includes a pane (**27**) which is fixed relative to the frame (**11**) and which includes an upper face (**29**) which coincides with the reference plane (**PR**), and **in that** the pane (**27**) includes an anti-glare treatment.

13. The digitizing apparatus according to any of the preceding claims, **characterized in that** the capture device has at least one main optical plane (**P0**), and **in that** the main optical plane (**P0**) forms, in a plane perpendicular to the reference plane (**PR**) and oriented along the direction of displacement, an acute angle greater than 45 degrees relative to the longitudinal direction of displacement, preferably greater than 80 degrees.

14. The digitizing apparatus according to any of the preceding claims, **characterized in that** the capture device has at least one main optical plane (**P0**), and **in that** the main optical plane forms, in a plane perpendicular to the reference plane (**PR**) and oriented along the direction of displacement, an acute angle greater than 45 degrees and less than 80 degrees, relative to the longitudinal direction of displacement.

15. The digitizing apparatus according to claim 14, **characterized in that** the capture device and the second lighting device (**36**) are arranged respectively on either side of a plane perpendicular to the reference plane (**PR**), parallel to the direction of extension of the sensor and containing an intersection of the main optical plane (**P0**) with the reference plane (**PR**).
